# EUROPEAN PATENT APPLICATION

(11) **EP 4 613 636 A1**
(43) Date of publication of application: **10.09.2025**
(21) Application number: 24161187.0
(22) Date of filing: 04.03.2024
(51) Int. Cl.: B64C 1/10, B64C 1/00

(54) **FLAT BULKHEADS, AN AIRCRAFT, AND A METHOD OF PRODUCING A FLAT BULKHEAD**

(71) Applicant: Airbus Operations GmbH, 21129 Hamburg (DE)
(72) Inventor: Heltsch, Norbert, 21129 Hamburg (DE); Wrzos, Michael, 21129 Hamburg (DE); Dick, Nikolaj, 21129 Hamburg (DE); Nilsson, Tobias, 21129 Hamburg (DE); Vichniakov, Alexei, 21129 Hamburg (DE); Jörn, Paul, 21129 Hamburg (DE)
(74) Representative: Schornack, Oliver

(57) **Abstract**

The present disclosure relates to a bulkhead for an aircraft, that has a substantially flat shape. This is achieved by an exterior shell (130) and a stiffening structure (120) provided thereon. An interior shell (110) can be formed with or without an opening, wherein the interior shell is connected in an outer region to the exterior shell and in an inner region to the stiffening structure. Further disclosed are an aircraft having such bulkhead and a method of manufacturing such bulkhead.

## Description

The present disclosure generally relates to a bulkhead of an aircraft, an aircraft having the same and a method of manufacturing a bulkhead. Particularly, the present disclosure relates to a flat bulkhead that has a substantially planar form as well as an aircraft having such bulkhead and a method of manufacturing a flat bulkhead.

A conventional bulkhead of an aircraft is dome-shaped, i.e. has a form corresponding to a section of a sphere. This form was developed based on the pressure that a conventional bulkhead has to withstand. Particularly, a bulkhead, such as a rear bulkhead, closes one end of a pressurised cabin of an aircraft and is, hence, subject to the pressure difference between the pressurised cabin and the ambient environment.

US 2019/0127040 A1 relates to a planar pressure bulkhead for an aircraft comprising two planar walls with a reinforcing structure provided therebetween. This allows gaining space in a longitudinal direction of the aircraft, which is particularly valuable, since this allows increasing the size of the pressurised cabin.

While a dome-shaped bulkhead may be lighter than the planar pressure bulkhead including at least three components, the dome-shaped bulkhead requires more space in the longitudinal direction of the aircraft.

It is therefore an object of the present disclosure to provide an improved bulkhead that is lightweight and space-saving.

This object is solved by the present invention as defined in the independent claims. Preferred embodiments are defined by the dependent claims.

According to a first aspect to better understand the present disclosure, a bulkhead for an aircraft comprises an exterior shell having a planar main portion and an inclined portion arranged at a circumference of the main portion and extending from the main portion, a stiffening structure comprising concentrically arranged elements, which are connected to and extend at an angle from the planar main portion of the exterior shell, and an interior shell having an outer circumferential edge connected to the exterior shell.

A bulkhead in the present disclosure refers to a structure delimiting a pressurised cabin in an aircraft. Such structure (bulkhead) is usually arranged in a cross-sectional plane of the aircraft, for example, at a front area or a rear area of the fuselage. As a mere example, a front bulkhead can be arranged between a cockpit and a radom of the aircraft, while a rear bulkhead can be arranged at the rear end of the passenger cabin, for instance in the cone-shaped rear part of the aircraft fuselage.

Furthermore, the interior shell has an opening forming an inner circumferential edge, wherein the stiffening structure forms an outer rim that is spaced apart from the planar main portion of the exterior shell, and wherein the interior shell is connected to the outer rim. In other words, the interior shell forms a ring, that may span from an outer circumference of the ring at the exterior shell to the outer rim of the stiffening structure at the inner circumference of the ring. The outer rim of the stiffening structure is elevated from the planar main portion, so that substantially the main portions of the interior shell are arranged spaced apart from the exterior shell.

As a mere example, the interior shell, the exterior shell and a portion of the stiffening structure can delimit a space of triangular or romp-shaped cross-section. In any case, the stiffening structure together with the interior shell create a three-dimensional structure that prevents the exterior shell from bending, particularly in case a pressure difference acts on the interior and exterior side of the exterior shell. As a mere example, a positive cabin pressure can act on the exterior shell (or a reduced pressure in the ambient environment of the aircraft can act on the exterior side of the exterior shell). It is to be understood that also a negative cabin pressure can act on the exterior shell.

Thus, the bulkhead does not need to be dome-shaped, which allows additional space in the aircraft and, for example, in the cabin. For instance, the flat bulkhead of the present disclosure can be installed in the aircraft at least one frame further to the end of the aircraft. On the one hand, this reduces the size (e.g., diameter) of the bulkhead, since this area of the fuselage is usually cone-shaped, which saves weight compared to the conventional larger dome-shaped bulkhead. On the other hand, the passenger cabin can be longer, which allows placing additional seats in the passenger cabin and/or allows placing additional monuments in the cabin, such as a galley or trolley parking spaces.

In addition, since the interior shell has an opening, the bulkhead can be manufactured in an easy manner. Firstly, the stiffening structure can be connected to the exterior shell, while all connecting areas of the stiffening structure and the exterior shell can be reached, for example, by a welding head or probe. Secondly, there are no closed cavities, which are difficult to produce. Since the interior shell has an opening and is connected only at its outer and inner circumferential region (such as the outer and inner circumferential edge), such regions can be easily reached, for example, by the welding head or probe. It is to be understood that the connections can likewise be achieved by riveting or providing fasteners, which can also be easily placed, as all necessary portions can be reached.

The angle at which the stiffening structure elements extend from the planar main portion of the exterior shell can be arbitrarily chosen. As a mere example, the angle can be approximately 90°, so that the stiffening structure extends substantially perpendicularly from the exterior shell. On the other hand, the angle can be between 0° and 90°, such as between 20° and 90° or between 30° and 90°. The angle together with a width of the concentrically arranged stiffening structure element sets the thickness of the overall bulkhead. In other words, the thickness of the bulkhead measured orthogonal to the planar main portion of the exterior shell is defined by the distance between the outer rim of the stiffening structure and the planar main portion of the exterior shell, which is defined by the angle and the width of the stiffening structure element.

In an implementation variant, the concentrically arranged elements of the stiffening structure can refer to several arc segments of same shape. The arc segments can be arranged spaced apart from one another in a circumferential direction, but can be arranged on a round shape, such as a circle or ellipse, on the planar main portion of the exterior shell.

Alternatively, the concentrically arranged elements of the stiffening structure form a complete circle or ellipse or other round form on the planar main portion of the exterior shell.

Alternatively or additionally, the concentrically arranged elements can comprise elements of different shape, that extend at different angles from the planar main portion of the exterior shell. At least some of such elements can contact one another. Likewise, an element can have a cross-sectional shape that extends at different angles from the planar main portion of the exterior shell, such as a triangular, omega-shaped or rectangular cross-section. The triangular cross-sectional shape can include one edge of the triangle being arranged substantially perpendicular to the planar main portion of the exterior shell. Alternatively, two edges of the triangle can form a flat angle with the planar main portion of the exterior shell.

In an implementation variant, the concentrically arranged elements of the stiffening structure can comprise a plurality of concentrically arranged elements of different radial size. As a mere example, a plurality of round or circular or elliptical concentrically arranged elements can be provided on the planar main portion of the exterior shell. Likewise, a plurality of elements having a triangular, omega-shaped or rectangular cross-section of different radial size can be provided on the planar main portion of the exterior shell. As a mere example, when cutting through the bulkhead, where the cutting line intersects with the centre of the bulkhead, the cut stiffening structure has a zigzag cross-sectional shape with an axis of symmetry in the middle of the exterior shell.

In an implementation variant, the exterior shell can comprise an outer flange extending from the inclined portion. Such outer flange increases stability of the exterior shell. In addition, such outer flange can be configured as a connecting means, in order to connect the bulkhead to a primary structure of the aircraft.

In an implementation variant, the interior shell can comprise an outer flange at the outer circumferential edge. Such outer flange increases stability of the interior shell. In addition, such outer flange can be configured as a connecting means, in order to connect the bulkhead to a primary structure of the aircraft.

As a mere example, the width of the outer flange of the exterior shell and/or the interior shell can be between 20 and 80 mm, preferably can be 50 mm, which is sufficient for welding, riveting or similar fastening of the bulkhead to the primary structure of the aircraft.

In an implementation variant, the interior shell and the exterior shell can be connected to one another at the respective outer flanges. In other words, the outer flanges of the interior and exterior shells are arranged parallel to one another. Fastening such "double flange" to the primary structure of the aircraft, for example by welding, riveting or the like, provides an increased resistance against detaching of the bulkhead from the primary structure of the aircraft compared to a conventional dome-shaped bulkhead.

In an implementation variant, the stiffening structure can comprise a flange at the outer rim. This flange of the outer rim can face inwardly, i.e., towards the centre of the bulkhead. This allows connecting the interior shell on top of the flange, while all regions for this connection can be reached by the corresponding tool, such as a welding head or probe or a riveting device or another fastening tool.

In an implementation variant, the stiffening structure can comprise a crown element forming the outer rim. This allows connecting the crown element to the exterior shell before connecting the interior shell to the outer rim of the crown element, which facilitates overall manufacturing of the bulkhead.

In an implementation variant, the exterior shell can comprise a plurality of through holes. Each through hole overlaps with a portion of the crown element. Thus, the through holes through the exterior shell enable access to the crown element, for example, with a fastening tool, which facilitates manufacturing of the bulkhead. Specifically, the interior shell can be connected to the crown element by guiding the fastening tool (e.g., a welding head or probe, riveting device, screwing device, etc.) through the through holes.

In an implementation variant, the stiffening structure can comprise the interior shell. In other words, the interior shell is integrated into the stiffening structure. This reduces the number of components to be connected to one another at the outer rim. As a mere example, a single sheet may form a portion of the stiffening structure enter the interior shell.

Alternatively, a separate interior shell and stiffening structure can be formed. Here, a portion of the stiffening structure as well as the interior shell are to be connected at the outer rim.

In an implementation variant, the exterior shell is a one-piece element. This facilitates manufacturing of the bulkhead, as the number of components of the bulkhead is reduced. Furthermore, the overall stability of the exterior shell is increased, as there are no connecting points or regions.

As a mere example, the inclined portion of the exterior shell consists of a plurality of inclined portions and a plurality of folds between adjacent inclined portions. In other words, when starting from a one-piece sheet, the inclined portion can be formed by bending the outer circumference of the sheet. This, however, requires that a circumferential length of the outer end of the sheet decreases, so that the plurality of folds are formed. The provision of inclined portions and folds at a one-piece sheet facilitates manufacturing, as the inclined portions can be formed by a simple processing step, such as press forming.

In an implementation variant, the inclined portion can comprise through holes having an axis intersecting with the outer rim. This allows reaching the portion of the stiffening structure forming the outer rim, for example, for connecting the interior shell to the outer rim.

In an implementation variant, the interior shell can comprise a cover area spanning from the outer rim to a rim disposed closer to a centre of the bulkhead. For example, the stiffening structure can comprise at least two concentrically arranged elements, wherein one forms the outer rim and the other one forms a rim closer to the centre of the bulkhead. While such inner rim may not be covered by the interior shell as described above, it is likewise possible that the interior shell extends further to the centre of the bulkhead to also cover the inner rim. Optionally, the inner shell can be connected to such inner rim. The interior shell can be made from two pieces, one extending outward (in a radial direction) from the outer rim and one extending inward (in the radial direction) from the outer rim to the inner rim. This facilitates connecting each portion of the interior shell to the stiffening structure and/or to the already connected portion of the inner shell.

Alternatively, the interior shell can be a one-piece element. This facilitates manufacturing of the interior shell and the bulkhead, since the number of components to be connected to one another is reduced.

In an implementation variant, the cover area can have a shape bent towards the exterior shell. Such bent form increases stability of the interior shell and, hence, of the entire bulkhead. The bent form further hinders a bulging or a warping of the inner shell, when under pressure.

According to a second aspect to better understand the present disclosure, a bulkhead for an aircraft comprises an exterior shell having a planar main portion and an inclined portion arranged at a circumference of the main portion and extending from the main portion, a stiffening structure comprising concentrically arranged elements, which are connected to and extend at an angle from the planar main portion of the exterior shell, wherein the concentrically arranged elements form a plurality of concentric rings spaced apart from the planar main portion of the exterior shell, and an interior shell having an outer circumferential edge connected to the exterior shell.

The explanations with respect to the exterior shell and the stiffening structure, such as the angle at which concentrically arranged elements extend, given with respect to the first aspect are likewise applicable to the second aspect. In other words, the exterior shell as well as the stiffening structure can have the form and/or capabilities as explained with respect to the first aspect or one or more of its variants. Thus, a repetition of such explanations and implementation variants is omitted for sake of brevity.

In the bulkhead of the second aspect, the interior shell comprises a plurality of ring-shaped connecting areas, each being connected to one of the plurality of concentric rings of the stiffening structure, and a plurality of cover areas arranged between the concentric rings, wherein each of the plurality of cover areas has a shape bent towards the exterior shell.

A bent shape of the cover areas increases stability of the interior shell. Since the cover area is bent towards the exterior shell, the pressure of the pressurised aircraft cabin acts onto the interior shell and presses it towards the exterior shell. Since the cover areas are already bent, they are intentionally deformed, which increases stability and resistance of the entire bulkhead against such pressure.

Moreover, as the cover areas span between the concentric rings of the stiffening structure, they form rings of bent material. This also increases overall stability of the bulkhead, particularly with respect to shear, since the interior shell is not subject to bulging or warping.

In an implementation variant, the cover areas, in a cross-section substantially along a radial direction of the bulkhead, can form a catenary curve. Such catenary curve provides a high stability of the interior shell, particularly against a pressure acting substantially perpendicular to the interior shell and bulkhead. It is to be understood that the cross-sectional form of cover areas can also be a section of a circle, an ellipse, or a parable.

Furthermore, the concentric rings formed by the cover areas increase overall rigidity and stability of the bulkhead, so that the material used for the bulkhead can be reduced. Particularly, the material of the interior shell can be reduced, for example, compared to the bulkhead of the first aspect. Thus, the bulkhead can be made lighter compared to the bulkhead of the first aspect).

In an implementation variant, the interior shell can be a one-piece element, i.e. can be made from one single sheet of material. This increases stability and also facilitates manufacturing due to a reduced number of components.

In an implementation variant, the interior shell can cover the entire exterior shell. In other words, the interior shell being connected to the exterior shell, for example, along an outer rim of the interior and exterior shell, forms a closed space with the exterior shell, in which the stiffening structure is arranged and connected to both the interior and exterior shell.

In an implementation variant, the exterior shell can comprise a plurality of through holes, and the stiffening structure can comprise a plurality of through holes. Each through hole of the stiffening structure overlaps with one through hole of the exterior shell and has a common axis therewith, wherein the common axis intersects with one of the connecting rings. Thus, the through holes through the exterior shell and the stiffening structure allow reaching the connecting rings, which facilitates manufacturing of the bulkhead. Although one or more interior cavities are formed between the exterior and interior shell, manufacturing of the bulkhead is facilitated by enabling access to all connecting portions. For example, a welding head or probe can be guided through the through holes to reach the connecting rings, where it can be used to weld the connecting rings to the interior shell. It is to be understood that other fastening tools, such as a riveting or screwing device can be entered through the through holes into the interior cavity to reach the connecting rings.

In an implementation variant, each of the connecting rings of the stiffening structure can comprise a plurality of protrusions, and the common axis of the through holes (in the exterior shell and the stiffening structure) intersects with one of the plurality of protrusions. Thus, each protrusion can be reached through a pair of through holes through the exterior shell and the stiffening structure. As a mere example, the protrusions can be employed to connect the stiffening structure to the interior shell via welding, riveting, screwing or a similar fastening procedure.

With respect to the first and second aspect, in an implementation variant of either aspect the stiffening structure can comprise at least one inclined portion and at least one crown element arranged substantially perpendicular to the planar main portion of the exterior shell. The at least one inclined portion can have an inner circumferential region that is connected to the planar main portion of the exterior shell and an outer circumferential region that is connected to one of the at least one crown element in a region spaced apart from the exterior shell.

Alternatively, the at least one inclined portion can have an outer circumferential region that is connected to the planar main portion of the exterior shell and an inner circumferential region that is connected to one of the at least one crown element in a region spaced apart from the exterior shell.

In any case, such a form of a stiffening structure (that is arranged between the exterior and interior shells) forms a three-dimensional truss. Specifically, when cutting along any radial line, the stiffening structure forms a truss member. This facilitates stability and resistance of the bulkhead against the pressure difference between the pressurised cabin and the ambient environment.

In an implementation variant, the exterior shell can comprise one or more openings configured to receive a sealing bush. Such opening(s) allow guiding another component of the aircraft through the exterior shell of the bulkhead.

In an implementation variant, the stiffening structure can comprise one or more openings configured to receive a sealing bush. Such opening(s) allow guiding another component of the aircraft through the stiffening structure of the bulkhead.

In an implementation variant, the interior shell can comprise one or more openings configured to receive a sealing bush. Such opening(s) allow guiding another component of the aircraft through the exterior shell of the bulkhead.

In any case, the openings in any pair of the exterior shell, the stiffening structure and the interior shell may be arranged on a common axis, so that the same sealing bush can be arranged in both or all openings. Thus, the entire bulkhead can be prepared to allow guiding the other component of the aircraft therethrough.

In an implementation variant, any one of the exterior shell, the stiffening element and the interior shell can be made from fibre reinforced plastic material or a metal material, preferably aluminium. As a mere example, the exterior shell and the stiffening element can be made from fibre reinforced plastic material, while the inner shell is made from a metal. It is to be understood that all components of the bulkhead can be made from a fibre reinforced plastic material.

In an implementation variant, the material of any one or all of the exterior shell, the stiffening element and the interior shell can be a fibre reinforced material having a matrix of a thermosetting polymer or a thermoplastic polymer. A thermoplastic polymer allows easier manufacturing of the respective component of the bulkhead, since a (flat) preform or organo sheet of the component can be brought into the final form by an easy manufacturing process, such as forming or thermal bending. An organo sheet in this disclosure refers to a fibre reinforced composite sheet of uniform thickness. Such uniform thickness facilitates manufacturing of the components constituting the bulkhead.

According to a third aspect to better understand the present disclosure, an aircraft comprises a bulkhead of the first aspect or one or more of its variants, and/or a bulkhead of the second aspect or one or more of its variants.

In an implementation variant, the aircraft can further comprise a primary structure, wherein the exterior shell of the bulkhead is connected to the primary structure. For example, the outer edge region of the exterior shell can be formed to correspond to the inner side of the primary structure, where the bulkhead is to be installed. Thus, the bulkhead can be easily connected to the primary structure, for example by welding, riveting or other fastening means.

In an implementation variant, the primary structure can be an outer skin and/or a stringer and/or a frame of the aircraft.

In an implementation variant, when the bulkhead is connected to the outer skin of the aircraft, any further primary structure can be omitted in the area, where the bulkhead is to be connected to the outer skin. As a mere example, a plurality of stringers (usually running along the longitudinal direction of the aircraft) can be interrupted. This provides for simple connecting areas at the outer skin and the outer circumference of the bulkhead without any protrusions, recesses or other obstacles.

In addition, the stiffening structure uniformly distributes any loads acting on the exterior shell. Thus, at the circumference of the bulkhead, the main load to be transferred into the primary structure of the aircraft results from the pressure acting perpendicular onto the exterior or interior shell. The main load to be transferred into the primary structure, hence, acts substantially perpendicular to the bulkhead, which usually corresponds to the longitudinal direction of the aircraft. This further allows connecting the bulkhead to the outer skin without additional stiffening elements at the outer skin, such as doublers, clips or the like.

According to a fourth aspect to better understand the present disclosure, a method of manufacturing a bulkhead of the first or second aspect or one or more of their variants comprises forming an exterior shell, connecting a stiffening structure to a planar main portion of the exterior shell, covering at least a portion of the exterior shell with an interior shell, and connecting the interior shell to the exterior shell and a portion of the stiffening structure.

In an implementation variant, the method can further comprise forming the interior shell, and/or forming the stiffening structure. For instance, a similar method for forming the exterior shell and the interior shell can be employed, particularly, if the same material is used for both shells.

In an implementation variant, press forming may be applied to a metal or fibre reinforced plastic material. This can be applied to form the exterior shell and/or the interior shell and/or the stiffening structure, in order to bring the respective component into the required shape.

In an implementation variant, press forming can comprise press forming a plurality of same components at once. As a mere example, a plurality of exterior shells or a plurality of interior shells or a plurality of stiffening structures can be stacked over one another, and the stack of exterior shells, interior shells or stiffening structures can be press formed at once. This fastens the entire process of manufacturing bulkheads significantly.

In an implementation variant, where the exterior shell, the stiffening structure and the interior shell are made from a fibre reinforced plastic material, forming the respective component can comprise a flat layup of fibres and/or prepreg material and (press) forming the fibres and/or prepreg material. For example, the flat layup may be performed by an automated fibre placement (AFP) process. This is very time and cost effective.

Alternatively, a 2.5 dimensional (2.5D) layup process may be performed, similar to a tailored wave laminate (TWL) process. Furthermore, it is likewise possible to perform an automated tape layup (ATL), for example, applying pre-cut fibre materials.

In an implementation variant, the forming of the exterior shell, and/or the stiffening structure, and/or the interior shell can include supplying a thermoplastic matrix material to the fibres and/or prepreg material before (press) forming.

As a mere example, a suitable material, which allows easy layup, preforming as well as press forming, is ET40 of Toray, which is an extensible and transformable (ET) prepreg (particularly extensible and transformable by 40%). The fibres can be glass fibres, carbon fibres, graphite fibres or the like. The fibres can be long fibres or short fibres. As a mere example, the prepreg and, hence, the fibres therein can include a plurality of slits, which leads to fibres of different lengths in the prepreg. Thus, the resulting component can be formed (e.g., bent, stretched, etc.) without causing folds of excess material.

In an implementation variant, after the material is laid up, such as a plurality of layers, the material is consolidated to form the resulting preform or component. As a mere example, an organo sheet (a substantially flat fibre reinforced sheet) can be consolidated at a high temperature, such as 400°C, allowing the summer plastic material/matrix to combine and consolidate. Since the preform (basic form) of the exterior shell, the interior shell and also portions of stiffening structure can be flat before being formed into the desired shape, a plurality of such organic sheets can be consolidated at once. Thus, the "raw" material of the exterior shell, the interior shell and the stiffening structure can be produced in a fast manner due to simultaneous consolidating of a stack of such components.

In an implementation variant, the connecting comprises welding, preferably, ultrasonic spot welding or ultrasonic continuous welding, to connect the interior shell to the exterior shell and/or to connect the stiffening structure to the exterior shell and/or to connect the interior shell to the stiffening structure and/or to connect individual components of the stiffening structure to one another.

Alternatively, riveting or adhering can be employed for one or more of these connecting steps.

In an implementation variant, (ultrasonic) spot welding can be performed through a hole in the exterior shell and/or a hole in the stiffening structure. A welding head or probe can be guided through the one or more holes to reach the to-be-folded area.

In an implementation variant, (ultrasonic) continuous welding can be applied to any components that can be reached from outside of the bulkhead or outside of a preassembled bulkhead. For instance, a welding head or probe can be brought to the to be welded devices from an exterior and/or through an opening in the interior shell.

The present disclosure is not restricted to the aspects and variants in the described form and order. Specifically, the description of aspects and variants is not to be understood as a specific limiting grouping of features. It is to be understood that the present disclosure also covers combinations of the aspects and variants. Thus, each variant or optional feature can be combined with any other aspect, variant, optional feature or even combinations thereof.

In the following, the present disclosure will further be described with reference to exemplary implementations illustrated in the figures, in which:
- Figure 1: schematically illustrates a front and back side of an exemplary bulkhead;
- Figure 2: schematically illustrates a front and back side of another exemplary bulkhead;
- Figure 3: schematically illustrates individual components of the exemplary bulkhead of Figure 1;
- Figure 4: schematically illustrates details of an exterior shell of the bulkhead of Figure 1;
- Figure 5: schematically illustrates details of a front side of the bulkhead of Figure 1;
- Figure 6A: schematically illustrates a perspective cut through the exemplary bulkhead of Figure 1 and the distribution of a pressure load;
- Figure 6B: schematically illustrates a perspective cut through the exemplary bulkhead of Figure 1 with an exemplary outer edge region and the corresponding distribution of a pressure load;
- Figure 7: schematically illustrates details of an interior shell of the bulkhead of Figure 2;
- Figure 8: schematically illustrates a perspective cut through the exemplary bulkhead of Figure 2 and the distribution of a pressure load;
- Figure 9: schematically illustrates individual components of the exemplary bulkhead of Figure 2;
- Figure 10: schematically illustrates a preassembled part of the bulkhead of Figure 2;
- Figure 11: schematically illustrates a further preassembled part of the bulkhead of Figure 2;
- Figure 12: schematically illustrates a further preassembled part of the bulkhead of Figure 2;
- Figure 13: schematically illustrates a preassembled part of the bulkhead of Figure 1;
- Figure 14: schematically illustrates an exterior region of the bulkhead of any of Figures 1 and 2 connected to a primary structure of an aircraft;
- Figure 15: schematically illustrates a rear region of a conventional aircraft and a rear region of an aircraft having a bulkhead according to Figure 1 or 2; and
- Figure 16: schematically illustrates a flow diagram of a method of manufacturing a bulkhead.

In the following description, for purposes of explanation and not limitation, specific details are set forth in order to provide a thorough understanding of the present disclosure. It will be apparent to one skilled in the art that the present disclosure may be practiced in other implementations that depart from these specific details.

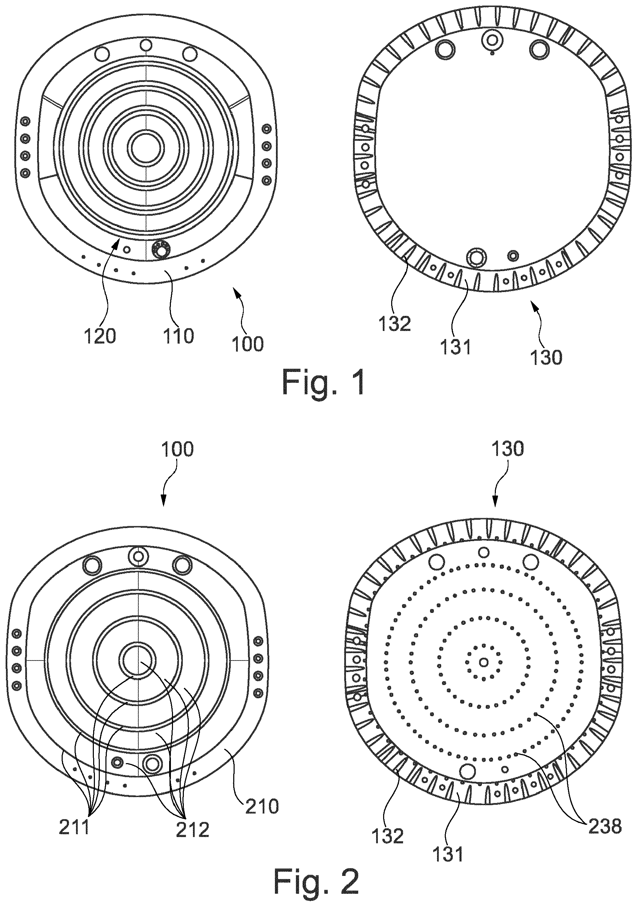

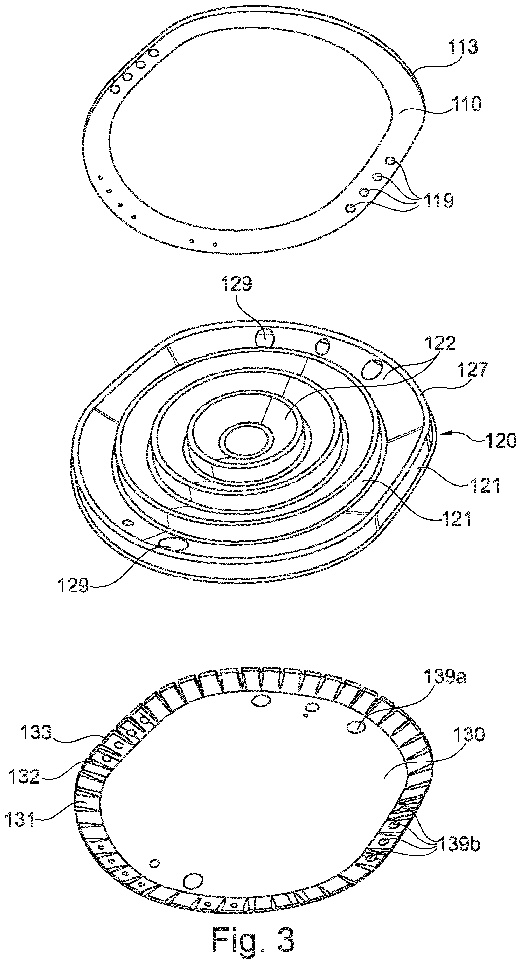

Figure 1 schematically illustrates a front and back side of an exemplary bulkhead 100. The front side (to the left in Figure 1) shows an interior shell 110 and a stiffening structure 120, while the back side (to the right in Figure 1) shows an exterior shell 130 of the exemplary bulkhead. The exterior shell has a planar portion and an inclined portion 131 arranged at a circumference of the planar main portion. The stiffening structure 120 comprises concentrically arranged elements. The interior shell 110 has an outer circumferential edge connected to the exterior shell 130 and an opening forming an inner circumferential edge which is connected to an outer rim of the stiffening structure 120, as it will be explained in more detail with respect to Figures 3 to 5.

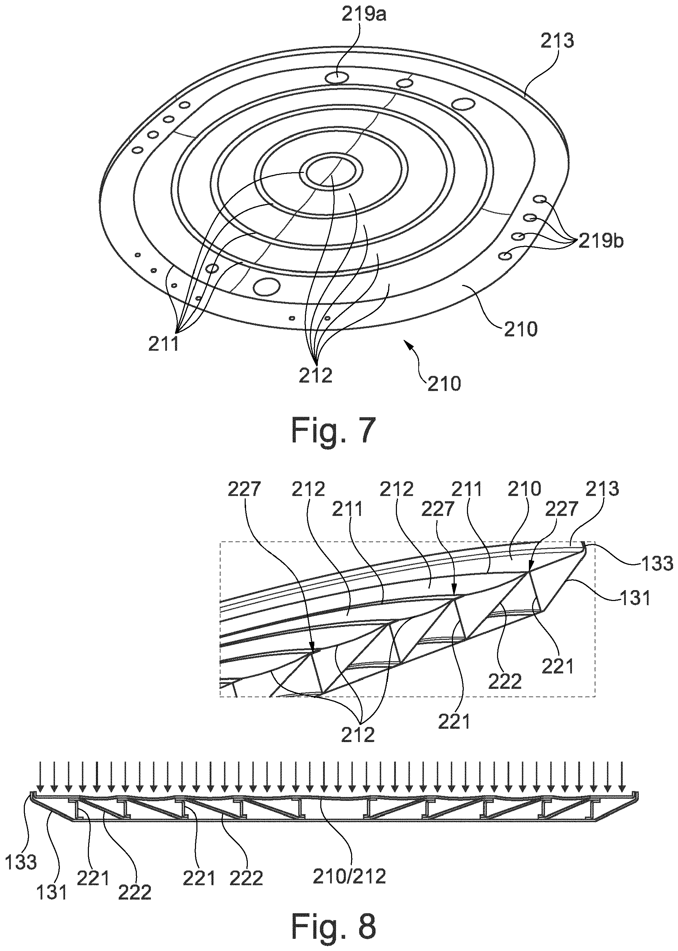

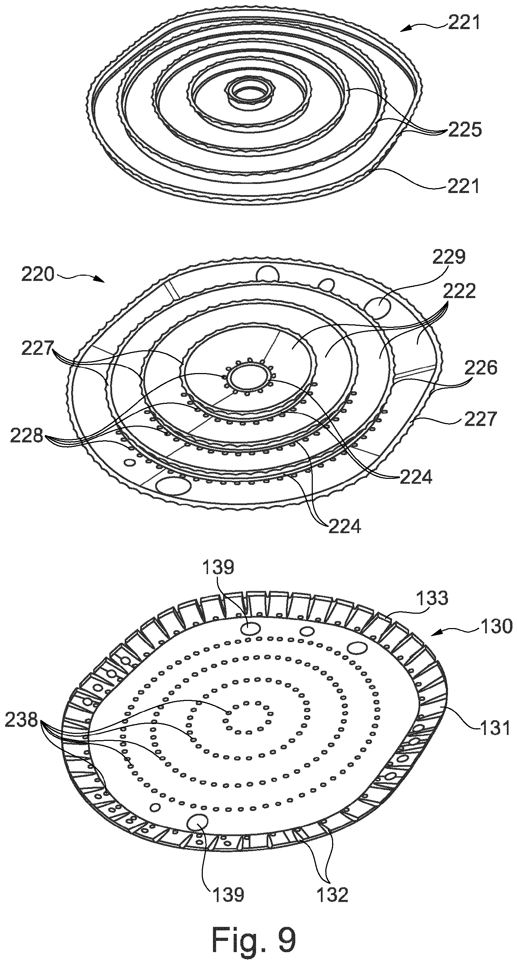

Figure 2 schematically illustrates a front and back side of another exemplary bulkhead 100. The front side (to the left in Figure 2) shows an interior shell 210 comprising a plurality of ring-shaped connecting areas 211 and a plurality of cover areas 212 arranged therebetween. The bulkhead 100 further comprises an exterior shell 130 having a planar main portion and an inclined portion 131 arranged at a circumference of the planar main portion. Further details of the bulkhead 100 are explained with respect to Figures 7 and 9.

Turning back to the bulkhead 100 of Figure 1, Figure 3 schematically illustrates individual components of this exemplary bulkhead 100.

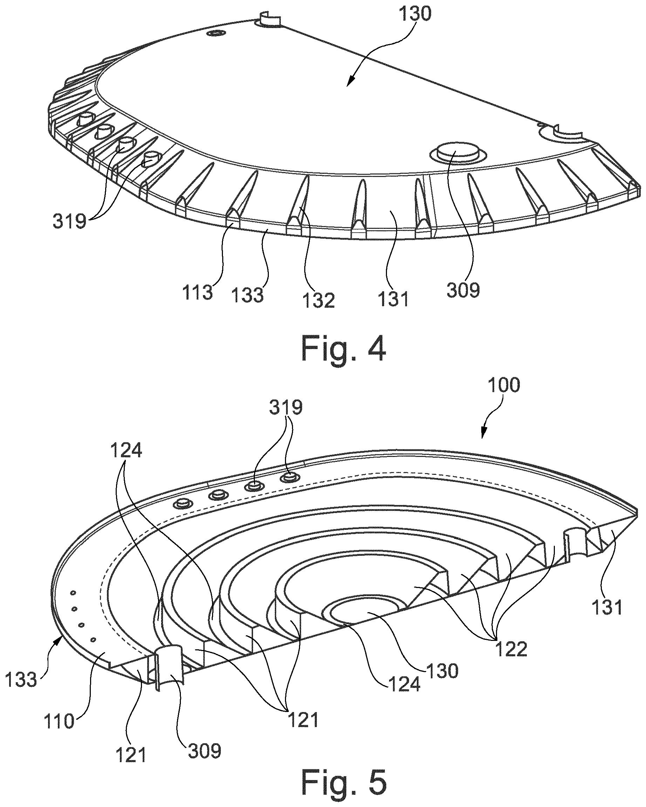

Beginning from the bottom of Figure 3 and further with respect to Figure 4, the exterior shell 130 has a planar main portion (where the reference sign 130 points to), and an inclined portion 131 arranged at a circumference thereof. The inclined portion 131 of the exemplary exterior shell 130 consists of a plurality of inclined portions 131 and a plurality of folds 132 between adjacent inclined portions 131. This allows manufacturing the exterior shell 130 as a one-piece element, and folding the inclined portions to extend from the planar main portion at an angle. The "superfluous" material during such folding/forming process step then forms the plurality of folds 132, which are particularly visible in Figure 4.

It is to be understood that instead of a plurality of folds 132, a plurality of cuts or punches can be made, such as triangular cuts (punched away material) allowing the inclined portions 131 to be bent upwards. This may reduce the weight of the exterior shell 130, but comes with additional process steps due to the cutting.

The middle portion of Figure 3 illustrates the stiffening structure 120 in more detail. While the stiffening structure 120 is illustrated as a one-piece element, it may be made from a plurality of components. In more detail, the stiffening structure 120 comprises concentrically arranged elements, such as substantially vertically arranged crown elements 121. Substantially vertically means substantially orthogonal to the planar main portion of the exterior shell 130. Thus substantially vertically also includes that the crown elements 121 are arranged at an angle deviating from 90° with respect to the planar main portion of the exterior shell 130. For example, the crown elements 121 can form an angle between 75° and 90°, preferably between 80° and 90°.

The stiffening structure 120 is connected to the planar main portion of the exterior shell 130. the crown elements 121 increase the stability of the exterior shell 130 with respect to bulging or warping, particularly if a pressure of the pressurised cabin acts onto the exterior shell (for example, in Figure 3 from top to bottom). Specifically, if the crown elements 121 form complete round shapes, such as the illustrated circle or ellipse, the rigidity of the exterior shell 130 is increased.

While such increased stability or rigidity of the exterior shell may be sufficient (particularly, when the crown elements 121 form a closed loop), the stiffening structure 120 can further comprise an inclined portion 122, that is arranged at an angle with respect to the planar main portion of the exterior shell 130, wherein the angle differs from 90°. Again, according to a further example, the stiffening structure 120 can only comprise such inclined portions 122, which increase stability and rigidity of the exterior shell 130, particularly, with respect to bulging or warping.

On the other hand, as illustrated in Figures 3 and 5, the stiffening structure 120 can comprise both concentrically arranged elements 121, 122. In addition, both concentrically arranged elements 121, 122 can be connected to the exterior shell 130 for increased stability and rigidity of the exterior shell 130.

Furthermore, the stiffening structure 120 can form an outer rim 127. This outer rim 127 may be formed by one or both of the crown element 121 and the inclined portion 122, particularly at the outermost portion of the stiffening structure 120 and being elevated from the planar main portion of the exterior shell 130.

With further reference to the top part of Figure 3 and Figure 4, the interior shell 110 has an outer circumferential edge connected to the exterior shell 130 and has an opening forming an inner circumferential edge. The interior shell 110 is connected to the outer rim 127. For instance, in a region at or forming the inner circumferential edge, the interior shell 110 is connected to the crown element 121 and/or the inclined portion 122 forming the outermost rim 127.

In addition to the outer rim 127, further crown elements 121 and/or inclined portions 122 may be referred to as inner rims.

As a mere example, the entire stiffening structure 120 can be formed from a one-piece material. For instance, using a 2.5D layup process or a three-dimensional layup process of fibre reinforced plastic, or using press forming of a preform allows manufacturing the entire stiffening structure 120 from one "sheet" of material.

Alternatively, one crown element 121 and one inclined portion 122 may be formed as a one-piece element. In addition to the above manufacturing types, a crown element 121 and less or an inclined portion 122 can be preformed in a wrapping process, particularly along the ring formed by these elements 121, 122. This facilitates manufacturing of the components of the stiffening structure 120.

Further alternatively, each crown element 121 and each inclined portion 122 are formed as a separate one-piece elements. This can be achieved by all of the above manufacturing types.

In any case, in order to facilitate connecting the stiffening structure 120 to the exterior shell 130, a plurality of exterior flanges 124 (Figure 5), also referred to as an inner circumferential region, are provided that is connected to the planar main portion of the exterior shell 130. The flange 124 facilitates such connection, for example during welding, adhering or riveting, as it can be reached with a tool more easily. In addition, a flange is rather flat, which allows more or less a full faced connection to a planar or flat component.

Likewise, the outer rim 127 as well as each inner rim can be formed as a plane region being arranged parallel to the planar main portion of the exterior shell 130.

Figures 3 to 5 further illustrate the bulkhead 100 as comprising one or more openings 119, 129, 139 in the respective components 110, 120, 130 of the bulkhead 100. A sealing bush 309, 319 can be received in such openings 119, 129, 139. For instance, the openings 119, 129, 139 can share a common axis, so that the sealing bush 309, 319 can run therethrough. The sealing bush 309, 319, for example, allows guiding a longitudinal component through the bulkhead 100, such as a duct, electric cable, hydraulic line, fuel line, or the like, while providing a sealing, i.e. maintaining a fluid tight bulkhead 100 with respect to the interior and exterior side thereof.

Furthermore, with particular reference to Figure 5, the interior shell can comprise an outer flange 113 at the outer circumferential edge thereof. Alternatively or additionally, the exterior shell 130 can comprise an outer flange 133 extending from the inclined portion 131 (see also Figure 4). Such flange(s) 113, 133 allow(s) mounting/connecting the bulkhead 100 to a primary structure of the aircraft. It further allows a fluid tight connection to the aircraft, so that the bulkhead 100 forms a boundary of the pressurised cabin of the aircraft.

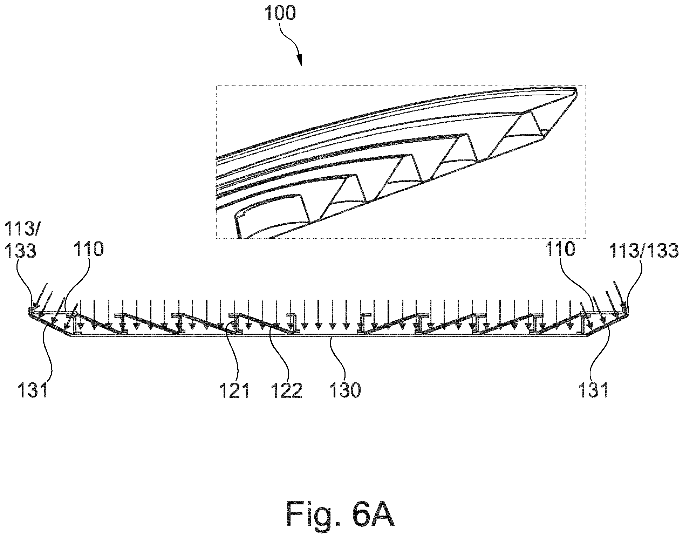

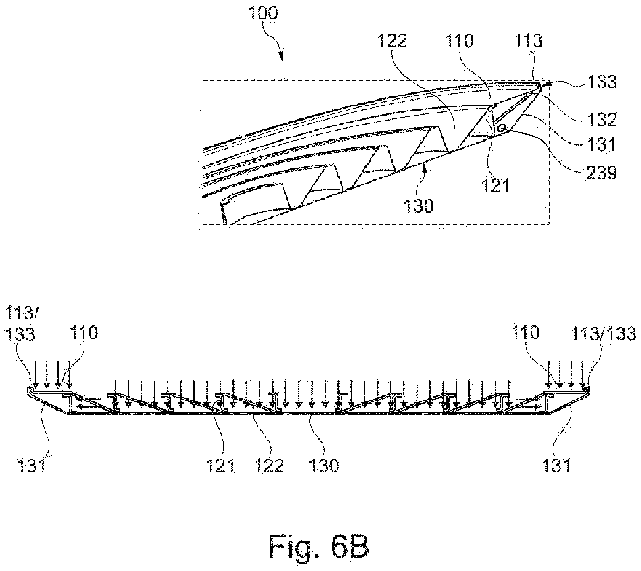

Figure 6A schematically illustrates a perspective cut through the exemplary bulkhead 100 of Figure 1 and the distribution of a pressure load. As can be derived, from Figure 6A, the pressure acts on the exterior shell 130, while the stiffening structure 120 provides stability and rigidity to the exterior shell 130 against such pressure. The pressure load is then guided into the outer region of the bulkhead 100, such as the flange 113, 133 of the interior shell 110 and/or the exterior shell 130 (any of which may form the outer side of the bulkhead 100). Here at the outer region of the bulkhead 100, the load of the pressure is transferred into the primary structure of the aircraft (not illustrated in Figure 6). The load of the pressure acts substantially parallel to the outer flange 113, 133, i.e. substantially parallel to an outer skin of the aircraft. Thus, the load transfer into the primary structure of the aircraft is not complex.

Figure 6B schematically illustrates a perspective cut through the exemplary bulkhead of Figure 1 with an exemplary outer edge region deviating from that of Figure 6A, and the corresponding distribution of a pressure load. Specifically, the stiffening structure 120 comprises a crown element 121 at its outermost region, for example, forming the outer rim 127. The inner shell 110 is connected to the outer rim 127 of the outer crown element 121, which together can form a fluid tight shell. This is particularly useful, if folds 132 are present at the inclined portions 131. Specifically, such folds 132 create "mouse holes" in the inclined portion 131, which render the inclined portion 131 not fluid tight. In other words, while the outer flange 113, 133 is connected to the primary structure of the aircraft and achieves fluid tightness of the bulkhead with respect to the primary structure, the rim of at least some of the "mouse holes" may not allow a fluid tight connection to the primary structure. Thus, having a fluid tight connection between the inner shell 110 and the primary structure, between the crown element 121 and the inner shell 110, and between the crown element 121 and the planar main portion of the exterior shell 130, creates a fluid tight bulkhead even with "mouse holes".

This is reflected in the pressure distribution acting on the planar main portion of the exterior shell 130, the outer crown element 121 forming the outer rim 127 and the inner shell 110 (see bottom drawing of Figure 6B).

Figure 7 schematically illustrates details of an interior shell of the bulkhead 100 of Figure 2. The bulkhead 100 of Figure 2 can comprise a plurality of components of the bulkhead 100 of Figures 1 and 3 to 6. Such components are provided with a respective reference numeral as for the component of Figures 1 and 3 to 6 plus 100. As a mere example, the interior shell 210 of the bulkhead 100 of Figure 2 can comprise an outer flange 213, which can correspond to the outer flange 113 as in Figure 5.

The main difference between the bulkhead 100 of Figure 2 and the bulkhead 100 of Figure 1 is that the interior shell 210 does not have an opening as interior shell 110. In this exemplary bulkhead 100, the interior shell 210 is configured to withstand the air pressure of the pressurised cabin and to form the main component to achieve fluid tightness (in the example of Figure 1 this is achieved by the exterior shell 130, and in the example of Figure 6B this is achieved by the exterior shell 130, the outer crown element 121, and the interior shell 110). This is illustrated in Figure 8 schematically showing a perspective cut through the exemplary bulkhead 100 of Figure 2 and the distribution of a pressure load.

Thus, the following description will omit the explanation of details that are the same or can be applied to the bulkhead 100 of Figure 2.

With reference to Figures 7 to 9, the interior shell 210 comprises a plurality of ring-shaped connecting areas 211, each being connected to one of the plurality of concentric rings 227 of the concentrically arranged elements 221, 222 of the stiffening structure 220. Between the concentric rings 227, i.e., between the connecting areas 211, the interior shell 210 comprises a plurality of cover areas 212, each of which has a shape bent towards the exterior shell 130. This pre-bent form of the cover areas 212 increases stability of the entire bulkhead 100, as the pressure acting on the interior shell 210 is equally distributed via the stiffening structure 220 towards the outer region of the bulkhead 100 such as the outer flange 213, 133.

For example, the cover areas 212, in a cross-section substantially along a radial direction of the bulkhead 100, can form a catenary curve. Such catenary curve provides a high stability of the interior shell 210, particularly against the pressure acting substantially perpendicular to the interior shell 210 and bulkhead 100. It is to be understood that the cross-sectional form of cover areas 212 can also be a section of a circle, an ellipse, or a parable.

While the interior shell 210 may add weight to the bulkhead 100 compared to the example with open interior shell 110 (Figure 1), the stiffening structure 220 can be made thinner and, hence, lighter. Thus, the overall weight of the bulkhead 100 having the complete interior shell 210 may even be lighter than the bulkhead 100 having the open interior shell 110 (Figure 1). The more complex way of manufacturing the bulkhead 100 of the example having the complete interior shell 210 will come with a higher stability and rigidity of the entire bulkhead 100.

Furthermore, as indicated in the explanation of Figure 3, the stiffening structure 120, 220 of either exemplary bulkhead 100 can comprise at least one crown element 121, 221 and at least one inclined portion 122, 222. These portions 121, 221, 122, 222 can be made from a plurality of sections or as individual one-piece elements. Each of these elements 121, 221, 122, 222 is connected to the planar main portion of the exterior shell 130, for example at a respective flange 223 of the crown element 121, 221 and/or flange 224 of the inclined portion 122, 222.

In the bulkhead 100 of Figures 7 to 9 enclosed cavities would be formed, when the "one sheet" interior shell 210 is connected on top of the exterior shell and the stiffening structure 220. In order to facilitate manufacturing of such bulkhead 100, a plurality of through holes 238 are provided in the exterior shell 130. Such through holes 238 allow a tool to reach into such enclosed cavities for connecting the stiffening structure 220 and/or the interior shell 210 to one another or to the exterior shell 130.

Likewise, the stiffening structure 220 can comprise a plurality of through holes 228, each of which overlaps with one through hole 238 of the exterior shell 130 and has a common axis. Thus, the tool may also enter an enclosed cavity (a space) delimited by the stiffening structure 220.

Turning to the example of Figure 6B, the inclined portions 131 can also comprise a plurality of through holes 239, which allow the tool to enter the cavity enclosed by the interior shell 110 and the outer crown element 121. Thus, the tool can reach the outer crown element 121 to facilitate connection of the crown element 121 to the interior shell 110. This even allows to have the interior shell 110 integrated into the stiffening structure 120. For instance, the outer inclined portion 122 and the interior shell 110 can be provided as a one-piece element, i.e., integrated into one another.

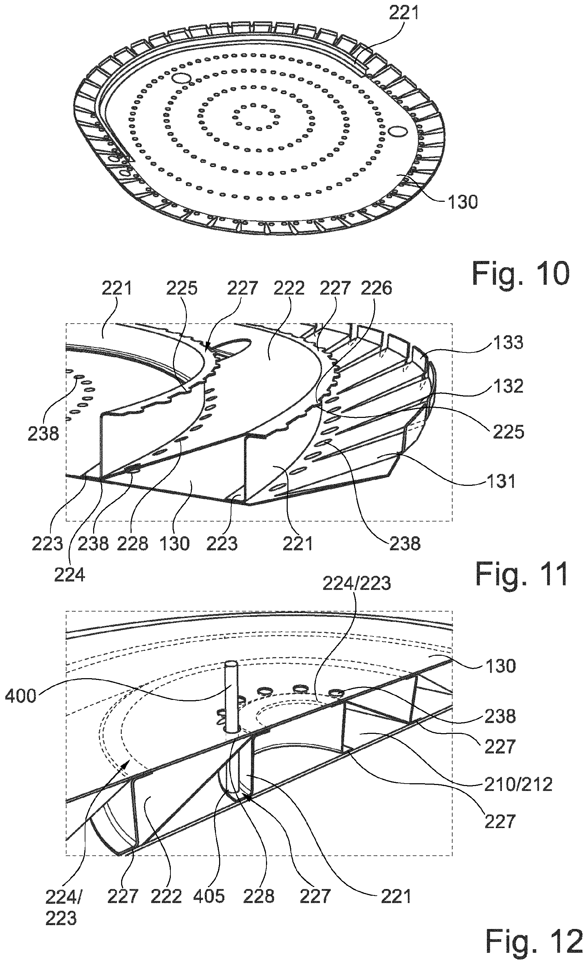

Figure 10 schematically illustrates a preassembled part of the bulkhead 100 of Figure 2. Without the through holes 238, this preassembling can likewise be applied to the bulkhead 100 of Figure 1. Furthermore, with respect to the example of Figure 6B, the through holes in the inclined portion 131 (illustrated in Figure 10 as through holes 238) would be through holes 239, which are the sole through holes in the exterior portion 130 of the example of Figure 6B.

With further reference to Figures 11 and 12 (respectively schematically illustrating further preassembled parts of the bulkhead 100), the manufacturing of such bulkhead 100 is explained in more detail. Specifically, Figure 10 illustrates a section of the crown element 221 connected to the planar main portion of the exterior shell 130. It is to be understood that a complete round crown element 221 can be manufactured and connected to the exterior shell 130. Such connection can be achieved by fastening flange 223 of the crown element 221 to the exterior shell 130 (see particularly Figure 11). Thus, connecting can be achieved without having enclosed cavities.

Thereafter, an inclined portion 222 of the stiffening structure 220 can be connected to the planar main portion of the exterior shell 130 and further onto the crown element 221. The inclined portion 222 can have a first flange 224 for connecting the inclined portion 222 to the exterior shell 130, and a second flange 227 for connecting the inclined portion 222 onto the crown element 221.

Each of the second flanges 227 forms a concentric ring 227 of the stiffening structure 120 to which the interior shell 210 can be connected (see particularly Figure 12). In order to connect the second flange 227 to the crown element 221, a fastening tool 400 (e.g., a welding head or probe, such as an ultrasonic welding probe) can be guided through a through hole 238 (or 239 in Figure 6B) in the exterior shell 130, to reach the crown element 221, while a respective counterpart for the tool can be placed on top of the second flange 227. With the next inner crown element 221, the fastening tool 400 is guided through a through hole 238 in the exterior shell 130 and a corresponding through hole 228 in the inclined portion 222. Figure 12 illustrates a fastening tool 400 during connecting the innermost crown element 221 to the interior shell 210.

Thus, any connection between inner shell 210, stiffening structure 220 and exterior shell 130 can be achieved in an easy manner and no enclosed cavities are present. Thus, each welding spot or weld line can be reached from both sides.

Furthermore, the connecting rings 227 (i.e. the second flange) of the stiffening structure 220 can comprise a plurality of protrusions 226. The common axis of the through holes 228, 238, 239 can intersect with one of the plurality of protrusions 226. In order to further facilitate connecting the respective components 210, 220, 130, the crown element 221 can also comprise protrusions 225 arranged at a location corresponding to the protrusions 226 of the connecting rings 227. Such protrusions 225, 226 facilitate connecting the crown element 221 with an inclined portion 222.

It is to be understood that one crown element 221 and one inclined portion 222 can be formed as a one-piece element. This facilitates mounting the entire bulkhead 100, and the fastening tool 400 has to be guided only to a flange 227 or a protrusion 225/226 of such one-piece element to connect it with the interior shell 210. Thus, no double (-layered) flanges of crown element 221 and inclined portion 222 need to be present.

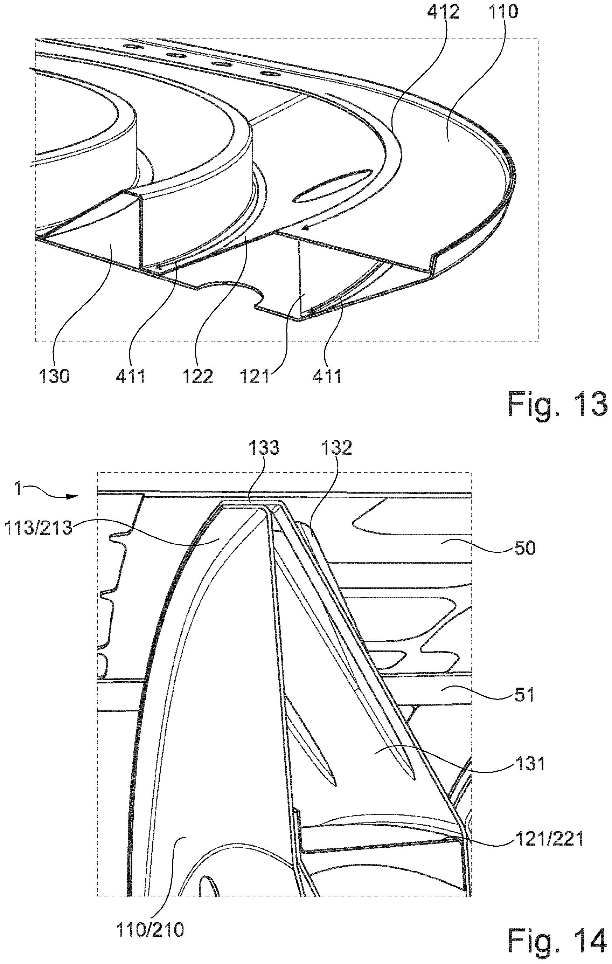

Figure 13 schematically illustrates a preassembled part of the bulkhead 100 of Figure 1 in comparison to the other exemplary bulkhead 100 of Figures 10 to 12. Specifically, since there are no enclosed cavities, i.e., the interior shell 110 does not cover the major part of the stiffening structure 120, a continuous welding or adhering can be achieved. For instance, weld line 411 between exterior shell 130 and outermost crown element 121 can be easily reached before the interior shell 110 is mounted. Furthermore, weld lines 411, 412 may then be easily reached to connect the inclined portion 122 to the exterior shell 130 and the interior shell 110 to the stiffening structure 120, respectively. In the example of Figure 6B, the weld line 412 would be replaced by point welding through the through holes 239 in the inclined portion 131

Figure 14 schematically illustrates an exterior region of the bulkhead 100 of any of Figures 1 and 2 connected to a primary structure 50, 51 of an aircraft 1. As a mere example, the interior shell 110 and the exterior shell 130 can be provided with a respective outer flange 113, 133, which are connected to one another for connecting the interior shell 110 and the exterior shell 130. Stringer gekürzt/aufgeteilt, damit bulklhead nicht geschnitten warden muss

Such flange(s) 113, 133 can likewise be employed to connect the bulkhead 100 to the primary structure 50, 51 of the aircraft 1. Such primary structure can be an outer skin 50, a longitudinal doubler 51 or a stringer (not illustrated in Figure 14). It is to be understood that a primary structure can also be a frame of the aircraft 1 (such frame not being displayed in Figure 14).

As a can be derived from Figure 14, the stringer (not illustrated) that would usually be arranged in the region, where the bulkhead 100 is connected to the primary structure, can be partially removed. In other words, shorter stringers can be arranged in front of or behind the bulkhead 100, in order to keep the region of the outer skin of the aircraft free. Thus, an inner surface of the outer skin is free of further components, which facilitates connecting the bulkhead, particularly the outer flanges 113, 213, 133, to the inner surface of the outer skin.

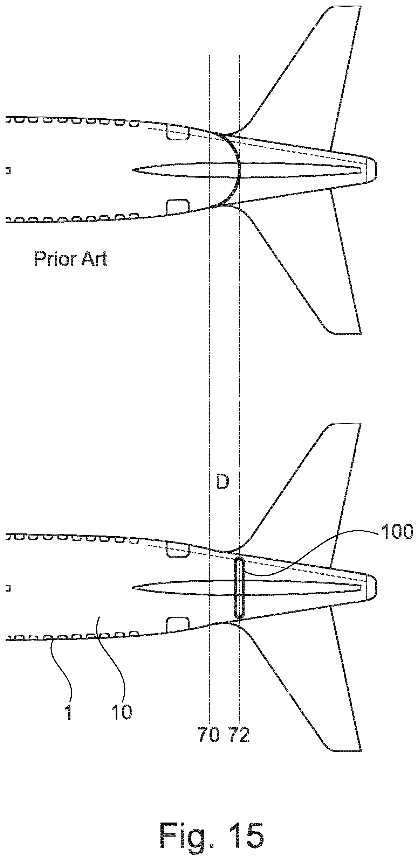

Figure 15 schematically illustrates a rear region of a conventional aircraft and a rear region of an aircraft 1 having a bulkhead 100, according to Figure 1 or 2. Figure 15 schematically illustrates, as dash dotted lines, locations of frames 70, 72, which shall schematically illustrate a certain position along the longitudinal direction of the aircraft. Of course, the dashed dotted lines may identify actual locations of frames of the fuselage of the aircraft 1.

As can be derived from the upper portion of Figure 15, a conventional dome-shaped bulkhead requires a lot of space in the longitudinal direction of the aircraft 1. Such space is referenced as "D".

According to the present disclosure (lower portion of Figure 15), the distance D between front and back of a conventional dome-shaped bulkhead can be freed and, hence, can be used for the pressurised passenger cabin 10. Due to the flatness of the bulkhead 100 of the present disclosure, such bulkhead 100 may be installed further towards the rear in the aircraft 1. This additionally reduces the size (e.g., diameter) of the bulkhead 100, which further saves weight.

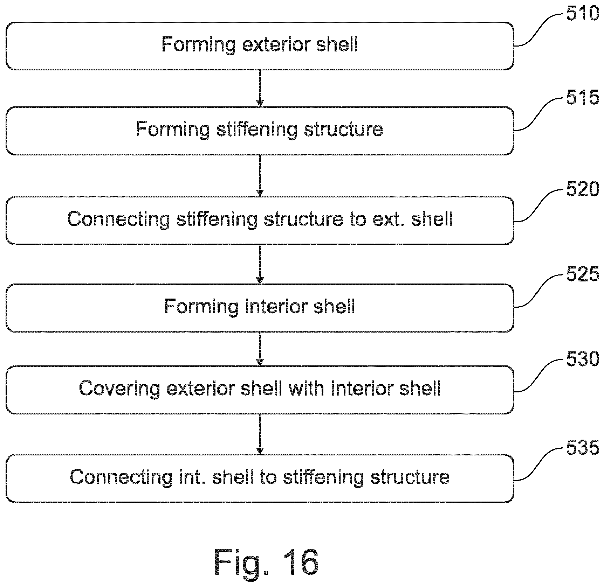

Figure 16 schematically illustrates a flow diagram of a method of manufacturing a bulkhead 100. The method allows manufacturing a bulkhead 100 of any of the examples of Figures 1 and 2.

In a first method of step 510, an exterior shell 130 is formed. This forming 510 comprises making a flat sheet-like preform from a metal or composite material (organo sheet). The forming 510 of the exterior shell 130 can comprise a flat layup of fibres and/or of a prepreg material. This can include an AFP, ATL, 2.5D AFP and/or TWL process.

The forming 510 can comprise making inclined portions 131 arranged at a circumference of a planar main portion of the exterior shell 130, for example, by bending the circumference. This can involve creating folds 132 between the plurality of inclined portions 131. To bend the excess material away from the inclined portions 131. Alternatively, a 3D exterior shell 130 can be formed, for example, in an additive layer manufacturing process at once.

The forming 510 can further comprise press forming the material of the exterior shell 130. Such press forming allows making the inclined portions 131 and optionally the folds 132 in a single process step.

As a mere example, fibres can be laid in a radial direction of the exterior shell 130. Alternatively, fibres can be laid at an angle to a radial direction of the exterior shell 130, for example, between 30° to 80° off the radial direction, preferably between 30° and 60°. This facilitates bending of the inclined portions.

The exterior shell 130 can have a size corresponding to the (outer) size of the bulkhead 100. The size of the exterior shell 130 depends on the size of the fuselage of the aircraft 1, wherein the bulkhead 100 is to be installed. As a mere example, the bulkhead can have an overall height of approximately 2500 mm to 3200 mm, such as 2890 mm, and a width of approximately 2600 mm to 3000 mm, such as 2800 mm, depending on the type of aircraft. It is to be understood that the bulkhead 100 can also form a circle of constant diameter.

Furthermore, a thickness of the exterior shell 130 can be between 1 mm and 3 mm, preferably 2 mm. The inclined portions 131 can have a length between 170 mm to 250 mm, such as 210 mm, while a pitch of the inclined portion 131 (a deviation from the planar main portion in a direction perpendicular to the planar main portion up to the rim of the inclined portion 131) can be 150 mm to 210 mm, such as 180 mm.

Returning to the method of Figure 16, the method can continue with forming, in step 515, a stiffening structure 120, 220. This can include making one or more integral stiffening elements 120, 220, such as triangular or omega type ring elements.

As a mere example, a metal or fibre reinforced plastic can be used. A fibre reinforced plastic may have a laminate thickness of 4 mm. In case of an integral stiffening element 120, 220, a press forming step (not illustrated) may be performed to achieve the three-dimensional shape.

Fibres can be laid to achieve the preform as well as the three-dimensional structure. For instance, fibres can be laid at an angle to a radial direction of the exterior shell 130, for example, between 30° to 80° off the radial direction, preferably between 30° and 60°. Alternatively or additionally, the fibres can be laid in a manner disclosed in US 11,179,903 B2. In any case, this facilitates bending of the inclined portions.

Furthermore, a height of the stiffening element 120, 220 can be between 110 mm and 150 mm, such as 130 mm. The diameter of each concentrically arranged element 121, 122 (measured at the highest portion, such as portion 227) can be between 200 mm and 2400 mm, such as 260 mm (for the smallest element 121, 122) and 2300 mm (for the largest). As a mere example, a pitch (distance) between two adjacent concentrically arranged elements 121, 122 can be between 250 and 310 mm, such as 280 mm.

In case of separate components of the stiffening structure 220 (cf. Figure 9), the crown elements 221 can have the above-described dimensions, such as a height between 110 mm and 150 mm, such as 130 mm and a diameter between 200 mm and 2400 mm, with a pitch of approximately 280 mm. A laminate thickness can be between 0.5 mm and 3 mm, preferably between 1 mm and 2.2 mm. The flange at the upper end of the crown element 221 and/or the protrusion 225 can have a width of 20 mm to 50 mm, such as 30 mm.

The inclined portion 122 of the stiffening structure 220 can have corresponding dimensions, i.e., a height of approximately 130 mm, an (outer) diameter of 260 mm to 2300 mm, and a flange width of approximately 30 mm. A laminate thickness can be between 0.5 mm and 2.5 mm, preferably between 1 mm and 1.6 mm. In case of through holes 228, they can have a diameter between 20 mm and 40 mm, such as 30 mm.

A pitch between adjacent through holes 228 (as well as through holes 238 of exterior shell 130) can be between 70 mm and 110 mm, such as 90 mm (along a circumferential direction).

Returning to the method of Figure 16, the method can continue with connecting, in step 520, a stiffening structure 120, 220 to the planar main portion of the exterior shell 130. This connecting 520 can include welding, adhering, riveting, screwing or similar fastening means. As a mere example, a (ultrasonic) welding head or probe can be employed for point welding or to perform a continuous weld line. As a mere example, in case of the bulkhead 100, according to Figure 2, the welding head or probe can be inserted into a through hole 238 of the exterior shell 130.

Thus, the method may further comprise making the through holes 238 (,239) into the exterior shell 130, for example, by punching, cutting, and the like. The holes 238 (,239) can have a diameter between 20 and 40 mm, such as 30 mm, depending on the fastening tool 400. The pitch between two adjacent through holes 238 can be between 70 mm and 110 mm, such 90 mm.

The method can further continue with step 525, forming an interior shell 110, 210. Depending on the type of bulkhead 100, this step 525 includes forming an interior shell 110 having an opening or forming an interior shell 210 that forms a fluid tight barrier of the bulkhead 100. In case of the interior shell 110 having the opening, a width of the interior shell 110 corresponds to a distance between the outer rim 133 of the exterior shell 130 and the outer rim 127 of the stiffening structure 120.

In case of the interior shell 210, the cover areas 212 can have a width between 120 mm and 280 mm, such as between 140 mm and 240 mm. The bent shape of the cover areas 212 can lead to a height of the bent shape (or a depth of the dent formed by the bent shape) of approximately 5 mm to 50 mm, preferably between 8 mm and 20 mm, such as 10 mm.

The method, according to Figure 16, continues in step 530 with covering at least a portion of the exterior shell 130 with the interior shell 110, 210, and in step 540, with connecting the interior shell 110, 210 to the exterior shell 130 and a portion of the stiffening structure 120, 220. This connecting 540 can again be performed by welding, adhering, riveting, screwing or the like. As a mere example, a fastening tool 400 can be inserted through one of the through holes 238 of the exterior shell 130, as well as one of the through holes 228 of the stiffening structure 220. Otherwise, a fastening tool 400 can be brought to the exterior surfaces of the components to be connected to one another, where a continuous connection line can be achieved, such as a weld line.

It is believed that the advantages of the technique presented herein will be fully understood from the foregoing description, and it will be apparent that various changes may be made in the form, constructions and arrangement of the exemplary aspects thereof without departing from the scope of the disclosure or without sacrificing all of its advantageous effects. Because the technique presented herein can be varied in many ways, it will be recognized that the disclosure should be limited only by the scope of the claims that follow.

## Claims

1. A bulkhead (100) for an aircraft (1), comprising:
an exterior shell (130) having a planar main portion and an inclined portion (131) arranged at a circumference of the main portion and extending from the main portion;
a stiffening structure (120) comprising concentrically arranged elements (121, 122), which are connected to and extend at an angle from the planar main portion of the exterior shell (130); and
an interior shell (110) having an outer circumferential edge connected to the exterior shell (130),
**characterised in that**:
the interior shell (110) has an opening forming an inner circumferential edge,
wherein the stiffening structure (120) forms an outer rim (127) that is spaced apart from the planar main portion of the exterior shell (130), and
wherein the interior shell (110) is connected to the outer rim (127).

2. The bulkhead (100) of claim 1, wherein
the exterior shell (130) comprises an outer flange (133) extending from the inclined portion (131),
the interior shell (110) comprises an outer flange (113) at the outer circumferential edge, and
the interior shell (110) and the exterior shell (130) are connected to one another at the respective outer flanges (113, 133).

3. The bulkhead (100) of claim 1 or 2, wherein
the exterior shell (130) is a one-piece element, and
the inclined portion (131) of the exterior shell (130) consists of plurality of inclined portions (131) and a plurality of folds (132) between adjacent inclined portions (131).

4. The bulkhead (100) of one of claims 1 to 3, wherein
wherein the inclined portion (131) comprises through holes (239) having an axis intersecting with the outer rim (127), and/or
the interior shell (110) comprises a cover area (212) spanning from the outer rim (127) to a rim (127) disposed closer to a centre of the bulkhead (100), and the cover area (212) has a shape bent towards the exterior shell (130).

5. A bulkhead (100) for an aircraft (1), comprising:
an exterior shell (130) having a planar main portion and an inclined portion (131) arranged at a circumference of the main portion and extending from the main portion;
a stiffening structure (220) comprising concentrically arranged elements (221, 222), which are connected to and extend at an angle from the planar main portion of the exterior shell (130), wherein the concentrically arranged elements (221, 222) form a plurality of concentric rings (227) spaced apart from the planar main portion of the exterior shell (130); and
an interior shell (210) having an outer circumferential edge connected to the exterior shell (130),
**characterised in that**:
the interior shell (210) comprises a plurality of ring-shaped connecting areas (211), each being connected to one of the plurality of concentric rings (227) of the stiffening structure (220), and a plurality of cover areas (212) arranged between the concentric rings (227),
wherein each of the plurality of cover areas (212) has a shape bent towards the exterior shell (130).

6. The bulkhead (100) of claim 5, wherein
the exterior shell (130) comprises a plurality of through holes (238),
the stiffening structure (220) comprise a plurality of through holes (228),
each through hole (228) of the stiffening structure overlaps with one through hole (238) of the exterior shell and has a common axis, and
the common axis intersects with one of the connecting rings (227).

7. The bulkhead (100) of claim 6, wherein
each of the connecting rings (227) of the stiffening structure (220) comprises a plurality of protrusions (226), and
the common axis of the through holes (228, 238) intersects with one of the plurality of protrusions (226).

8. The bulkhead (100) of one of claims 1 to 7, wherein
the stiffening structure (120, 220) comprises at least one inclined portion (122, 222) and at least one crown element (121, 221) arranged substantially perpendicular to the planar main portion of the exterior shell (130), and
the at least one inclined portion (122, 222) has an inner circumferential region (124, 224) that is connected to the planar main portion of the exterior shell (130) and an outer circumferential region (127, 227) that is connected to one of the at least one crown element (121, 221) in a region spaced apart from the exterior shell (130).

9. The bulkhead (100) of one of claims 1 to 8, wherein
the exterior shell (130) comprises one or more openings (139) configured to receive a sealing bush (309, 319), and/or
the stiffening structure (120, 220) comprises one or more openings (129) configured to receive a sealing bush (309, 319), and/or
the interior shell (110) comprises one or more openings (119, 219) configured to receive a sealing bush (309, 319).

10. An aircraft (1), comprising:
a bulkhead (100) of one of claims 1 to 9.

11. The aircraft (1) of claim 10, further comprising:
a primary structure (50),
wherein the exterior shell (130) is connected to the primary structure (50, 51),
wherein, preferably, the primary structure is an outer skin (50) and/or a stringer (51) and/or a frame of the aircraft (1).

12. A method of manufacturing a bulkhead of one of claims 1 to 9, the method comprising:
forming (510) an exterior shell (130);
connecting (520) a stiffening structure (120, 220) to a planar main portion of the exterior shell (130);
covering (530) at least a portion of the exterior shell (130) with an interior shell (110); and
connecting (540) the interior shell (110) to the exterior shell (130) and a portion of the stiffening structure (120, 220).

13. The method of claim 12, further comprising:
forming (525) the interior shell (110), and/or
forming (515) the stiffening structure (120, 220),
wherein, preferably, forming (510) the exterior shell (130) comprises press forming a material of the exterior shell, and/or forming (515) the stiffening structure (120, 220) comprises press forming a material of the stiffening structure, and/or forming (525) the interior shell (110) comprises press forming a material of the interior shell (110),

14. The method of claim 13, wherein
forming (510, 515, 525) the exterior shell (130) and/or the stiffening structure (120, 220) and/or the interior shell (110, 210) comprises a flat layup of fibres and/or a prepreg material and press forming the fibres and/or prepreg material, and preferably further includes supplying a thermoplastic matrix material to the fibres and/or prepreg material before press forming.

15. The method of one of claims 13 or 14, wherein
connecting (520, 540) comprises welding, preferably, ultrasonic spot welding through a hole in the exterior shell or ultrasonic continuous welding through an opening in the interior shell.
